# EUROPEAN PATENT APPLICATION

(11) **EP 4 455 539 A1**
(43) Date of publication of application: **30.10.2024**
(21) Application number: 22911293.3
(22) Date of filing: 21.12.2022
(51) Int. Cl.: F17C 13/00

(54) **CONTAINER, PUMP SYSTEM, AND MAINTENANCE METHOD**

(30) Priority: 22.12.2021 JP 2021207650
(71) Applicant: EBARA CORPORATION, Ota-ku, Tokyo 144-8510 (JP)
(72) Inventor: KASATANI, Tetsuji, Tokyo 144-8510 (JP); HONDA, Shuichiro, Tokyo 144-8510 (JP); IWAMI, Mitsutaka, Tokyo 144-8510 (JP); WATAJI, Kei, Tokyo 144-8510 (JP); KIKUCHI, Hyuga, Tokyo 144-8510 (JP); SUZUKI, Asaki, Tokyo 144-8510 (JP)
(74) Representative: Pritzlaff, Stefanie Lydia
(86) International application number: PCT/JP2022/047184
(87) International publication number: WO 2023/120591

(57) **Abstract**

A hollow container (13) is provided above a hollow column (11) around a liquefied gas pump (P). The container (13) includes: an openable and closable lower plate members (22a, b) at a lower part of the container (13); manual opening/closing devices (34a, b) to be operated to open and close the lower plate members (22a, b) inside the container (13); glove boxes (35a, b) configured to allow a user to insert his or her hands from outside the container (13) in order to operate the manual opening/closing devices (34a, b) inside the container (13); and work windows (33a, b) arranged near the glove boxes (35a, b) and the manual opening/closing devices (34a, b) so that the glove boxes (35a, b) and manual opening/closing devices (34a, b) are visible from outside the container (13).

## Description

### Technical Field

The present invention relates to a container, a pump system, and a maintenance method.

### Background Art

Among liquefied gas pumps, conventional liquefied natural gas (LNG) pumps have had a temporary plate placed on a flange of the column top to prevent LNG from leaking to outside (for example, see Patent Literature 1). LNG is heavier than air in a low-temperature region, so it has never been released into the atmosphere. Contrarily, a cryogenic fluid such as liquefied hydrogen or liquefied ammonia has a specific gravity of the gasified gas lighter than that of air, so there is a risk that liquefied hydrogen or liquefied ammonia will be released.

In a case of maintenance of liquefied hydrogen pumps, air (mainly oxygen and nitrogen) will liquefy and solidify in -253°C region when facing liquefied hydrogen. If air liquefies, liquid oxygen is produced that can be explosive, and when air solidifies, both the nitrogen and the oxygen can damage the pump. Furthermore, in a case of maintenance of liquefied ammonia pump, ammonia leakage outside can cause a health hazard to humans because ammonia is toxic.

### Citation List

### Patent Literature

Patent Literature 1: Japanese Patent Laid-Open No. 2018-80801

### Summary of Invention

### Technical Problem

When a user pulls up a cryogenic pump or installs a cryogenic pump in maintenance of a liquefied gas pump, a partition chamber is required, such as: a buffer container provided on a column around the liquefied gas pump and forming a barrier zone; or a purge container provided above the buffer container to avoid air from entering the inside and avoid the principal liquid (liquefied hydrogen, liquefied ammonia, etc.) from being released to the outside.

Pulling up and installing a liquefied gas pump creates work to hold the pump in a partition chamber (for example, a purge container), and this work requires inevitably requires human hands. However, when the user opens the partition chamber to insert his or her hands into the partition chamber, there are problems in which air enters the barrier zone and the principal liquid leaks from the partition chamber to the outside.

The present invention has been made in view of the above-mentioned problems, and it is an object thereof to provide a container, a pump system, and a maintenance method that do not require opening a container even in work with insertion of human hands into the container in maintenance of a liquefied gas pump.

### Solution to Problem

A container of the present invention is a hollow container provided above a hollow column provided around a liquefied gas pump, and the container includes: an openable and closable lower plate member provided at a lower part of the container; a manual opening/closing device provided inside the container and configured to be operated to open and close the lower plate member; a glove box provided inside the container and configured to allow a user to insert his or her hand from outside the container in order to operate the manual opening/closing device; and a work window arranged near the glove box and the manual opening/closing device so that the glove box and the manual opening/closing device are visible from outside the container.

According to this configuration, when performing maintenance on the liquefied gas pump, the user can insert his or her hands from outside the container into the glove box inside the container (purge container), operate the manual opening/closing device inside the container, and open and close the lower plate member provided at a lower part of the container. In this case, when opening and closing the lower plate member of the container for maintenance of the liquefied gas pump, the user does not need to open the container to insert human hands into the container. Therefore, unlike the conventional configuration, this configuration can prevent air from entering the barrier zone and the principal liquid from leaking outside from the partition chamber (container), due to insertion of human hands into the partition chamber (purge container).

The container of the present invention may further includes a buffer container arranged below the container and between the column and the container, in which the buffer container includes: a second openable and closable lower plate member provided at a lower part of the buffer container; a second manual opening/closing device provided inside the buffer container and configured to be operated to open and close the second lower plate member; a second glove box provided inside the buffer container and configured to allow a user to insert his or her hand from outside the buffer container in order to operate the second manual opening/closing device; and a second work window arranged near the second glove box and the second manual opening/closing device so that the second glove box and the second manual opening/closing device are visible from outside the buffer container.

According to this configuration, when performing maintenance on the liquefied gas pump, the user can insert his or her hands from outside the buffer container into a second glove box inside the buffer container (arranged below the container and between the column and the container), operate the second manual opening/closing device inside the buffer container, and open and close the second lower plate member provided at a lower part of the buffer container. In this case, when opening and closing the second lower plate member of the buffer container for maintenance of the liquefied gas pump, the user does not need to open the buffer container to insert human hands into the buffer container. Therefore, unlike the conventional configuration, this configuration can prevent air from entering the barrier zone and the principal liquid from leaking outside from the partition chamber (buffer container), due to insertion of human hands into the partition chamber (buffer container).

Furthermore, the container of the present invention may include the buffer container provided with: a third glove box configured to allow a user to insert his or her hands from outside the buffer container for manual work inside the buffer container; and a third work window arranged near the third glove box so that the inside of the buffer container is visible from the outside of the buffer container.

According to this configuration, when performing maintenance on the liquefied gas pump, the user can insert his or her hands from outside the buffer container into a third glove box inside the buffer container to work inside the buffer container. In this case, when performing manual work inside the buffer container for maintenance of the liquefied gas pump, the user does not need to open the buffer container to insert human hands into the buffer container. Therefore, unlike the conventional configuration, this configuration can prevent air from entering the barrier zone and the principal liquid from leaking outside from the buffer container, due to insertion of human hands into the buffer container.

The pump system of the present invention includes a liquefied gas pump and either of the containers described above.

According to this system, like the container described above, when opening and closing the lower plate member of the container for maintenance of the liquefied gas pump, the user does not need to open the container to insert human hands into the container. Therefore, unlike the conventional configuration, this configuration can prevent air from entering the barrier zone and the principal liquid from leaking outside from the container, due to insertion of human hands into the purge container.

A maintenance method of the present invention is a maintenance method for a liquefied gas pump, and the maintenance method includes: a step of providing a hollow container above a hollow column provided around the liquefied gas pump; and a step of a user inserting his or her hand from outside the container into a glove box provided inside the container, the user operating a manual opening/closing device provided inside the container, and the user opening and closing a lower plate member provided at a lower part of the container.

According to this maintenance method, like the container described above, when opening and closing the lower plate member of the container for maintenance of the liquefied gas pump, the user does not need to open the container to insert human hands into the container. Therefore, unlike the conventional configuration, this configuration can prevent air from entering the barrier zone and the principal liquid from leaking outside from the container, due to insertion of human hands into the purge container.

### Advantageous Effect of Invention

According to the present invention, in maintenance of the liquefied gas pump, the user does not need to open the container to insert human hands into the container.

### Brief Description of Drawings

[Figure 1] Figure 1 is an explanatory diagram showing a pump system in an embodiment of the present invention.
[Figure 2] Figure 2 is an explanatory diagram showing an example of a process of drawing a liquefied gas pump in the embodiment of the present invention.
[Figure 3] Figure 3 is an explanatory diagram showing an example of the process of drawing the liquefied gas pump in the embodiment of the present invention.
[Figure 4] Figure 4 is an explanatory diagram showing an example of the process of drawing the liquefied gas pump in the embodiment of the present invention.
[Figure 5] Figure 5 is an explanatory diagram showing an example of the process of drawing the liquefied gas pump in the embodiment of the present invention.
[Figure 6] Figure 6 is an explanatory diagram showing an example of the process of drawing the liquefied gas pump in the embodiment of the present invention.
[Figure 7] Figure 7 is an explanatory diagram showing an example of the process of drawing the liquefied gas pump in the embodiment of the present invention.
[Figure 8] Figure 8 is an explanatory diagram showing another example of a purge container in the embodiment of the present invention.
[Figure 9] Figure 9 is an explanatory diagram showing still another example of a purge container in the embodiment of the present invention.
[Figure 10] Figure 10 is an explanatory diagram showing another example of a glove box in the embodiment of the present invention.
[Figure 11] Figure 11 is an explanatory diagram showing still another example of a glove box in the embodiment of the present invention.
[Figure 12] Figure 12 is an explanatory diagram showing still another example of a glove box in the embodiment of the present invention.

### Description of Embodiment

Hereinafter, a container according to an embodiment of the present invention will be described using the drawings. In the present embodiment, a case of a container will be illustrated that is used for a pump system, etc. including a liquefied gas pump that delivers cryogenic liquefied gas such as liquefied hydrogen or liquefied ammonia.

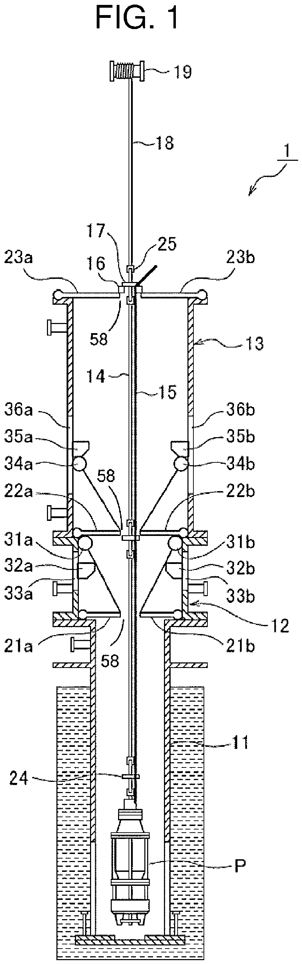

A configuration of a pump system according to an embodiment of the present invention will be described with reference to the drawings. Figure 1 is an explanatory diagram schematically showing a cross section of a pump system according to the present embodiment. As shown in Figure 1, the pump system 1 includes a liquefied gas pump P. The liquefied gas pump P in one aspect is a pump for cryogenic liquefied gas, such as a liquid hydrogen pump or a liquefied ammonia pump. Furthermore, the pump system 1 includes a hollow column 11 provided around the liquefied gas pump P, a hollow buffer container 12 provided on top of the column 11, and a hollow purge container 13 provided above the column 11 and on top of the buffer container 12. Here, the buffer container 12 and the purge container 13 are collectively referred to as containers, and the containers are hollow containers provided above a hollow column provided around the liquefied gas pump.

In this pump system 1, the buffer container 12 includes buffer lower plates 21a and 21b that are provided on the lower surface side of the buffer container 12 and can be opened and closed upward. The purge container 13 also includes container lower plates 22a and 22b that are provided on the lower surface side of the purge container 13 and can be opened and closed upwards, and container upper plates 23a and 23b that are provided on the upper surface side of the purge container 13 and can be opened and closed upwards.

When the buffer lower plates 21a and 21b, the container lower plates 22a and 22b, and the container upper plates 23a and 23b are closed, each of the plates obstructs the upward and downward flow of gas, and can configure a partition chamber within the buffer container 12 or within the purge container 13. However, the buffer lower plates 21a and 21b, the container lower plates 22a and 22b, and the container upper plates 23a and 23b are each provided with an opening 58 near the vertical passage position of a support wire 14 and an in-tank electric wire 15 for allowing them (the support wire 14 and the in-tank electric wire 15) to pass even in the closed state.

The pump system 1 also includes a connector 24 connected to the liquefied gas pump P, a support wire 14 connected to the connector 24 for hanging and supporting the liquefied gas pump P, and a bisected support members 16 provided on the container upper plates 23a and 23b. The pump system 1 also includes a lifting link 17 provided on the bisected support members 16, a connector 25 connected to the support wire 14, a hoist wire 18 connected to the connector 25, and a hoist drum 19 for winding up hoist wire 18. Note that the pump system 1 may or may not include the in-tank electric wire 15 connected to the liquefied gas pump P.

In this pump system 1, the buffer container 12 also includes winches 31a and 31b that are operated to open and close the buffer lower plates 21a and 21b, glove boxes 32a and 32b configured to allow a user to insert hands from outside the buffer container 12 to operate the winches 31a and 31b, and work windows 33a and 33b arranged near winches 31a, 31b and glove boxes 32a, 32b. The winches 31a, 31b and glove boxes 32a, 32b inside the buffer container 12 are visible from the outside of the buffer container 12 through the work windows 33a and 33b.

Furthermore, in this pump system 1, the purge container 13 includes winches 34a and 34b that are operated to open and close the container lower plates 22a and 22b, glove boxes 35a and 35b configured to allow a user to insert hands from outside the purge container 13 to operate the winches 34a and 34b, work windows 36a and 36b arranged near winches 34a, 34b and glove boxes 35a, 35b. The winches 34a, 34b and glove boxes 35a, 35b inside the purge container 13 are visible from the outside of the purge container 13 through the work windows 36a and 36b.

The operation of the pump system configured as described above will be described with reference to the drawings.

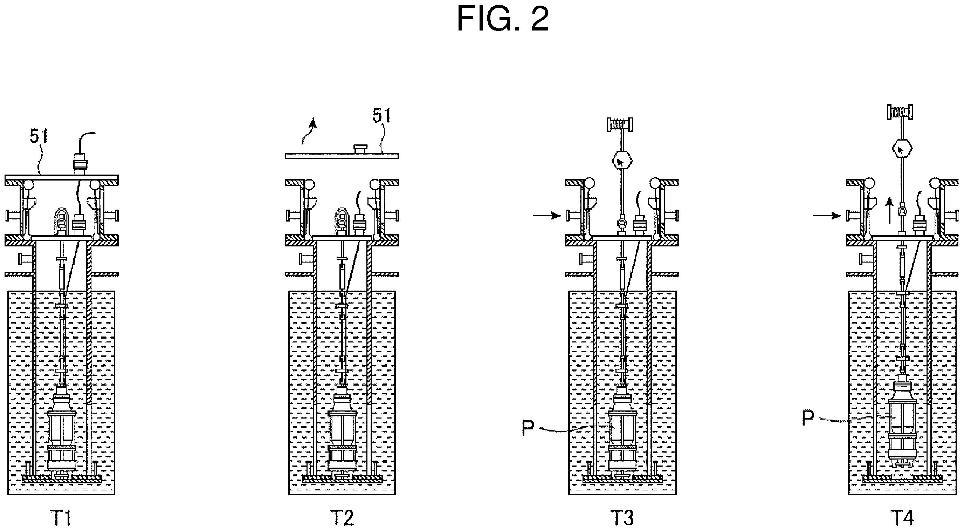

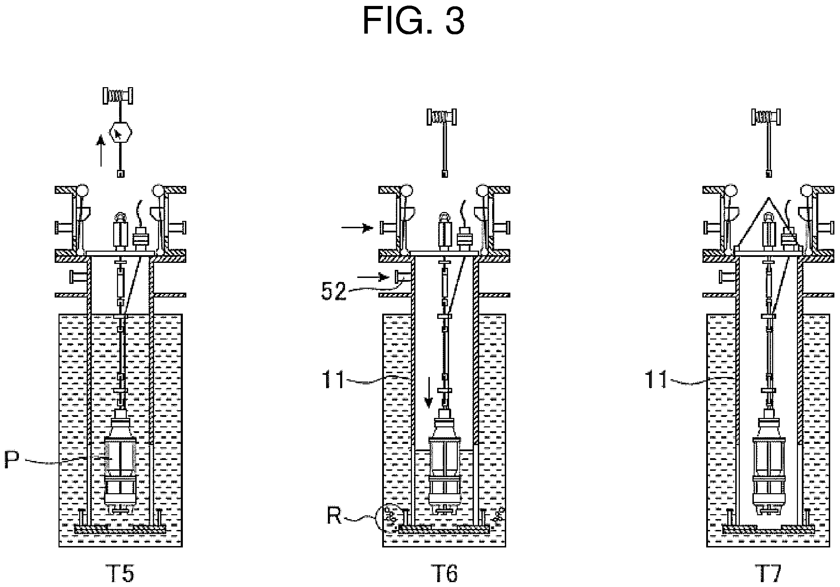

Figures 2 to 7 are schematic diagrams showing an example of a process of drawing the liquefied gas pump. As shown in Figures 2 and 3, the upper cover 51 of the buffer container 12 is removed from time T1 to T2, and the weight of the liquefied gas pump P is measured from time T3 to T5. Then, from time T6 to T7, gas (for example, hydrogen) is supplied through the gas supply pipe 52 communicating with the column 11. As a result, the liquefied gas in the column is pushed down, and the gas escapes from the region R of the foot valve provided at a lower part of the column 11. As a result, the liquefied gas inside the column 11 is discharged to the outside of the column.

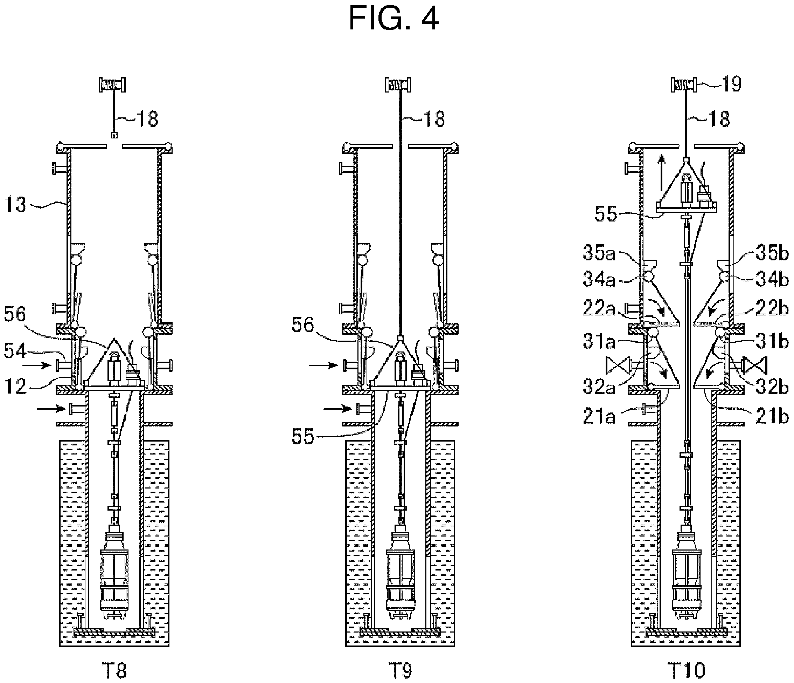

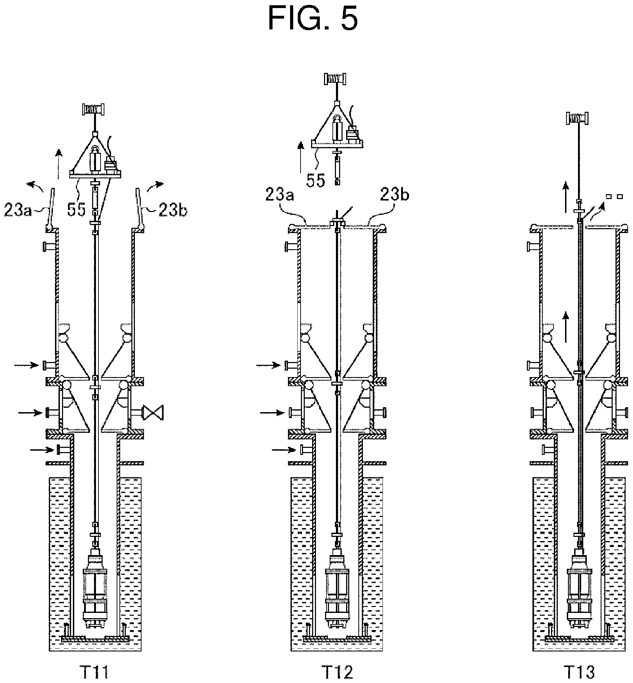

As shown in Figures 4 and 5, at time T8, the user attaches the purge container 13 on the buffer container 12, supplies gas (for example, nitrogen) through the gas supply pipe 54 communicating with the buffer container 12, and removes air in buffer container 12 and purge container 13.

At time T9, the user inserts his or her hands into the glove boxes 32a and 32b. Then, the user connects the hoist wire 18 to the sling wire 56 attached to the top plate 55 and winds the hoist wire 18 with the hoist drum 19 while observing the internal state through the work windows 33a and 33b. Thereby, the user lifts the top plate 55 as shown by the arrow. Then, at time T10, when the top plate 55 is lifted above the buffer lower plates 21a and 21b, the user inserts his or her hands from the glove boxes 32a and 32b, operates the winches 31a and 31b, and closes the buffer lower plates 21a and 21b.

At this time, when the buffer lower plates 21a and 21b are closed, the user inserts his or her hands from the glove boxes 32a and 32b and positions the support wire 14 and the in-tank electric wire 15 while observing the internal state through the work windows 33a and 33b, so that the support wire 14 and the in-tank electric wire 15 are not pinched by the buffer lower plates 21a and 21b, and so that they pass through the opening 58.

Furthermore, when the top plate 55 is lifted above the container lower plates 22a and 22b, the user inserts his or her hands from the glove boxes 35a and 35b, operates the winches 34a and 34b, and closes the container lower plates 22a and 22b.

At this time, when the container lower plates 22a and 22b are closed, the user inserts his or her hands from the glove boxes 35a and 35b and positions the support wire 14 and the in-tank electric wire 15 while observing the internal state through the work windows 36a and 36b, so that the support wire 14 and the in-tank electric wire 15 are not pinched by the container lower plates 22a and 22b, and so that they pass through the opening 58.

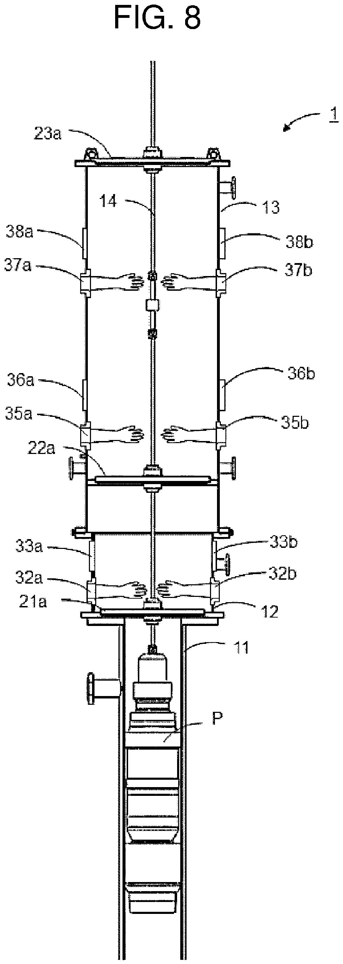

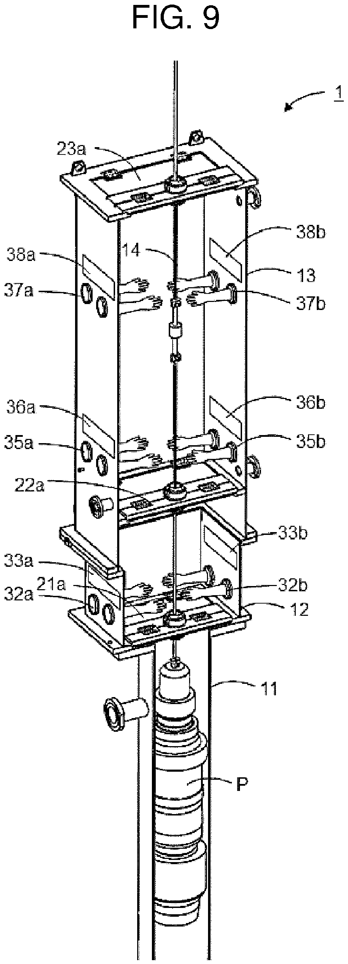

In subsequent lifting of the top plate 55 above the purge container 13, if the top plate 55 shakes within the purge container 13, the top plate 55 and the purge container 13 may come into contact and be damaged. Then, in order to prevent the top plate 55 from shaking inside the purge container 13 and safely lift it upward, as shown in Figures 8 and 9, glove boxes 37a, 37b and work windows 38a, 38b may be provided on the side walls of the purge container 13 below the container upper plates 23a and 23b.

This allows the user to: observe the state of the hoist wire 18, the support wire 14, the in-tank electric wire 15, and top plate 55 from the work windows 38a and 38b; and position the hoist wire 18, the support wire 14, the in-tank electric wire 15, and the top plate 55 by inserting his or her hands from the glove boxes 37a and 37b. This then allows the user to safely lift the top plate 55 above the purge container 13 without shaking it.

From time T11 to T13, the user opens the container upper plates 23a and 23b to take out the top plate 55, and closes the container upper plates 23a and 23b.

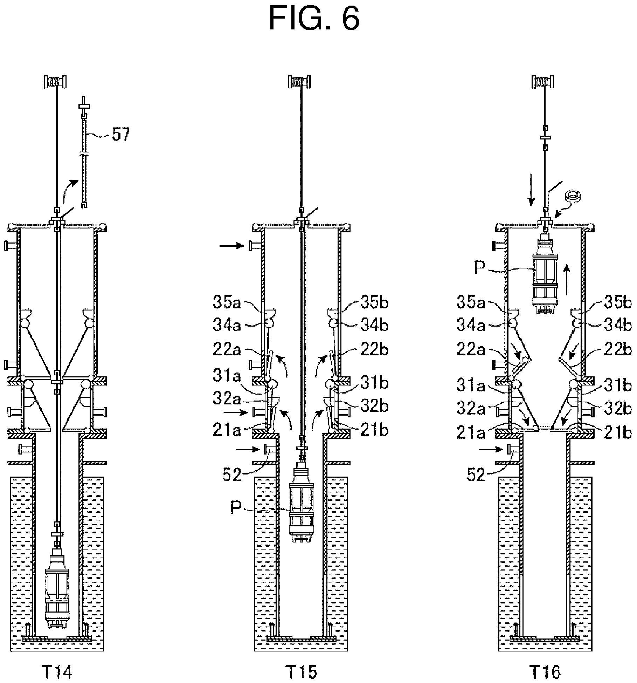

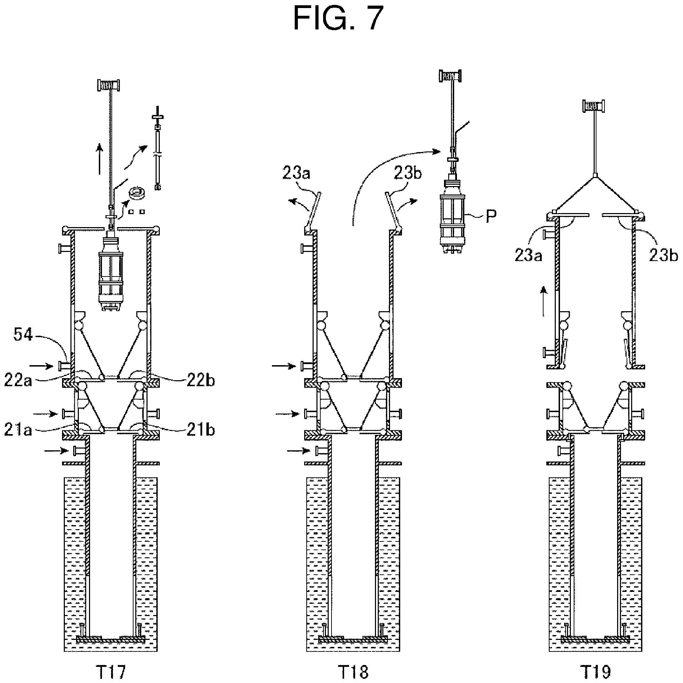

As shown in Figures 6 and 7, at time T14, the user removes the wire link 57. Then, at time T15, the user inserts his or her hands from the glove boxes 32a and 32b, operates the winches 31a and 31b and opens the buffer lower plates 21a and 21b, and inserts his or her hands from the glove boxes 35a and 35b, operates the winches 34a and 34b and opens the container lower plates 22a and 22b, to lift up the liquefied gas pump P. In addition, the user supplies a gas (for example, hydrogen) through a gas supply pipe 52 communicating with the column 11, and supplies a gas (for example, helium) through a gas supply pipe 54 communicating with the buffer container 12, to perform purging. This gas supply continues from time T15 to T18.

At time T16, when the liquefied gas pump P is lifted above the buffer lower plates 21a and 21b, the user inserts his or her hands into the glove boxes 32a and 32b, operates the winches 31a and 31b, and closes the buffer lower plates 21a and 21b. Then, when the liquefied gas pump P is lifted above the container lower plates 22a and 22b, the user inserts his or her hands from the glove boxes 35a and 35b, operates the winches 34a and 34b, and closes the container lower plates 22a and 22b.

At time T17, in a state in which the buffer lower plates 21a and 21b are closed and the container lower plates 22a and 22b are closed, the user supplies a gas (for example, hydrogen) through a gas supply pipe 54 communicating with the purge container 13 to perform purging. Then, at time T18, the user opens the container upper plates 23a and 23b, and takes out the liquefied gas pump P. Thereafter, at time T19, the user closes the container upper plates 23a and 23b, and completes removal of the liquefied gas pump P.

For the operations up to time T17, sets of work windows and glove boxes near them are arranged at intervals in the up-down direction of the container. This allows the user to work while determining the positions of the hoist wire 18, support wire 14, in-tank electric wire 15, and liquefied gas pump P by: inserting his or her hands from the glove boxes 32a and 32b while observing the internal state from the work windows 33a and 33b; inserting his or her hands from the glove boxes 35a and 35b while observing the internal state from the work windows 36a and 36b; or inserting his or her hands from the glove boxes 37a and 37b while observing the internal state from the work windows 38a and 38b. This makes it possible to avoid contact of the inner wall surface from the hollow column 11 through the purge container 13 with these devices, and safely lift the devices such as the liquefied gas pump P.

According to the pump system of the present embodiment, when performing maintenance on the liquefied gas pump P, the user can insert his or her hands from outside the purge container 13 into the glove boxes 35a and 35b inside the purge container 13, operate the winches 34a and 34b inside the purge container 13, and open and close container lower plates 22a and 22b provided at the lower part of the purge container 13. In this case, when opening and closing the container lower plates 22a and 22b of the purge container 13 for maintenance of the liquefied gas pump P, the user does not need to open the purge container 13 to insert human hands into the purge container 13. Therefore, unlike the conventional configuration, this configuration can prevent air from entering the barrier zone and the principal liquid from leaking outside from the partition chamber (purge container 13), due to insertion of human hands into the partition chamber (purge container 13).

Furthermore, while the user pulls up the liquefied gas pump P, support wire 14, and in-tank electric wire 15 through the long distance from the bottom of the hollow column 11 to above the purge container 13, the user pulls up the devices while observing the internal states through a plurality of work windows provided in the up-down direction of the container, inserting his or her hands from the glove boxes, and positioning the devices. This makes it possible to avoid contact of the inner wall surface from the hollow column 11 through the purge container 13 with these devices, and safely pull up the devices such as the liquefied gas pump P.

Furthermore, according to the present embodiment, when performing maintenance on the liquefied gas pump P, the user can insert his or her hands from outside the buffer container 12 into the glove boxes 32a and 32b inside the buffer container 12, operate the winches 31a and 31b inside the buffer container 12, and open and close the buffer lower plates 21a and 21b provided at the lower part of the buffer container 12. In this case, when opening and closing the buffer lower plates 21a and 21b of the buffer container 12 for maintenance of the liquefied gas pump P, the user does not need to open the buffer container 12 to insert human hands into the buffer container 12. Therefore, unlike the conventional configuration, this configuration can prevent air from entering the barrier zone and the principal liquid from leaking outside from the partition chamber (buffer container 12), due to insertion of human hands into the partition chamber (buffer container 12).

Although an embodiment of the present invention is described above by way of illustration, the scope of the present invention is not limited to this and can be changed and modified according to the purpose within the scope described in the claims.

For example, at time T9, the user inserts his or her hands from the glove boxes 32a and 32b, and connects the hoist wire 18 to the sling wire 56 attached to the top plate 55 while observing the internal state from the work windows 33a and 33b. Regarding this, the length of a human hand is limited, and if the hand cannot reach the wires 18 and 56, there can be also a configuration such that: a pliers-like tool that can hold the hoist wire 18 on the sling wire 56 is provided on the inner wall of the buffer container 12; and the operator inserts his or her hands from the glove boxes 32a and 32b and uses such a work tool to hold the hoist wire 18 on the sling wire 56.

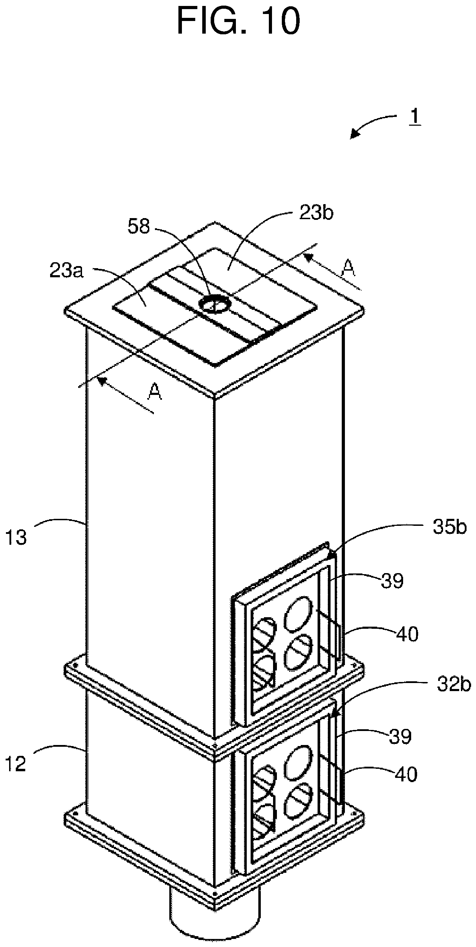

Furthermore, as shown in Figures 10 to 12, the glove boxes 32a, 32b, 35a, and 35b may be movable glove boxes. In this case, the glove boxes 32a, 32b, 35a, and 35b includes fixed frames 39 each fixed to the side wall of the buffer container 12 and the purge container 13, a movable frame 41 attached to the fixed frame 39 so as to be movable inward via bellows 44, and a handle 40 provided so as to protrude outward from the movable frame 41. One end of the bellows 44 is fixed to the fixed frame 39 and the other end thereof is fixed to the movable frame 41.

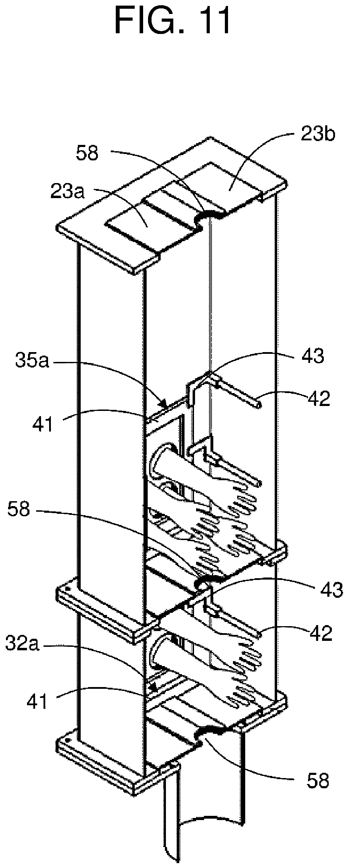

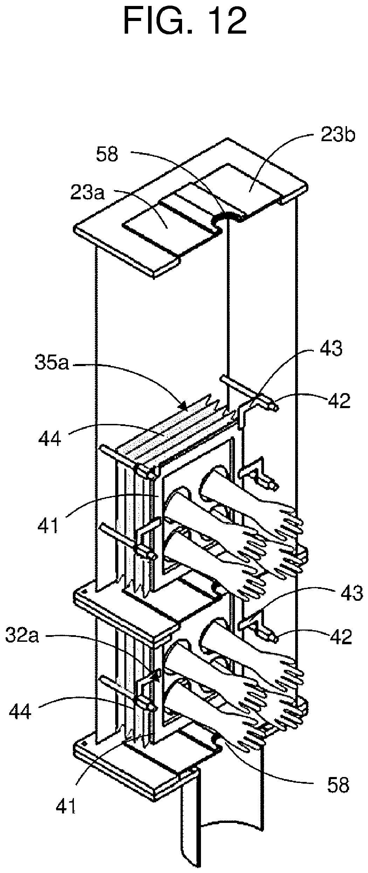

In this case, as shown in Figures 11 and 12, the buffer container 12 and the purge container 13 each have the inner side walls. Each side wall is provided with four guide shafts 42, which guide the movement of the movable frame 41, so as to protrude inward. Each movable frame 41 has four corners respectively provided with four bearings 43 that support the movable frame 41 so that it can slide along the guide shaft 42. The position and length of each guide shaft 42 is set at a location where it does not come into contact with the pump P passing inside the buffer container 12 and the purge container 13. Furthermore, each of the bearings 43 and the guide shafts 42 may be provided with a locking mechanism (not shown).

Even in a larger buffer container 12 and a larger purge container 13, employment of such a movable glove box allows the worker to move the movable frames 41 of the glove boxes 32a, 32b, 35a, and 35b inward, enabling the worker's hands to reach the internal work space. In this case, the fixed frame 39 and the movable frame 41 are connected via the bellows 44. This makes it possible to prevent the liquefied gas inside the buffer container 12 and the purge container 13 from leaking to the outside, and to prevent external air from entering the inside of the buffer container 12 and the purge container 13 even if the operator moves the movable frame 41, allowing for safely working.

### Industrial Applicability

As described above, the container according to the present invention has the advantage that the user does not need to open the container to insert human hands into the container in maintenance of the liquefied gas pump, and the container is usefully used in pump systems including liquefied gas pumps that deliver cryogenic liquefied gases such as liquefied hydrogen and liquefied ammonia.

### Reference Signs List

1 pump system
11 column
12 buffer container
13 purge container
14 support wire
15 in-tank electric wire
16 bisected support member
17 lifting link
18 hoist wire
19 hoist drum
21a, 21b buffer lower plate (second lower plate member)
22a, 22b container lower plate (lower plate member)
23a, 23b container upper plate
24 connector
25 connector
31a, 31b winch (second manual opening/closing device)
32a, 32b glove box (second glove box)
33a, 33b work window (second work window)
34a, 34b winch (manual opening/closing device)
35a, 35b glove box
36a, 36b work window
37a, 37b glove box
38a, 38b work window
39 fixed frame
40 handle
41 movable frame
42 guide shaft
43 bearing
44 bellows
51 upper cover
52 gas supply pipe
54 gas supply pipe
56 sling wire
57 wire link
58 opening
P liquefied gas pump
R region of foot valve

## Claims

1. A container being a hollow container provided above a hollow column provided around a liquefied gas pump, the container comprising:
an openable and closable lower plate member provided at a lower part of the container;
a manual opening/closing device provided inside the container and configured to be operated to open and close the lower plate member;
a glove box provided inside the container and configured to allow a user to insert his or her hand from outside the container in order to operate the manual opening/closing device; and
a work window arranged near the glove box and the manual opening/closing device so that the glove box and the manual opening/closing device are visible from outside the container.

2. The container according to claim 1, comprising a buffer container arranged below the container and between the column and the container, wherein
the buffer container includes:
a second openable and closable lower plate member provided at a lower part of the buffer container;
a second manual opening/closing device provided inside the buffer container and configured to be operated to open and close the second lower plate member;
a second glove box provided inside the buffer container and configured to allow a user to insert his or her hand from outside the buffer container in order to operate the second manual opening/closing device; and
a second work window arranged near the second glove box and the second manual opening/closing device so that the second glove box and the second manual opening/closing device are visible from outside the buffer container.

3. A pump system comprising:
a liquefied gas pump; and
the container according to claim 1 or 2.

4. A maintenance method for a liquefied gas pump, the maintenance method comprising:
a step of providing a hollow container above a hollow column provided around the liquefied gas pump; and
a step of a user inserting his or her hand from outside the container into a glove box provided inside the container, the user operating a manual opening/closing device provided inside the container, and the user opening and closing a lower plate member provided at a lower part of the container.
